# FASCICULE DE BREVET EUROPEEN

(11) **EP 1 004 845 B1**
(45) Date de publication et mention de la délivrance du brevet: **12.02.2003**
(21) Numéro de dépôt: 99402894.2
(22) Date de dépôt: 22.11.1999
(51) Int. Cl.: F41H 11/16, G01V 3/15

(54) **Procédé et installation pour le déplacement précis d'un véhicule sur un terrain en particulier un véhicule de déminage**
Verfahren und Vorrichtung zu einer genauen Bewegung eines Fahrzeugs in einem Gelände, insb. eines Minenräumfahrzeugs
Method and apparatus for accurately moving a vehicle on a terrain, i.e. a mine clearing vehicle

(30) Priorité: 25.11.1998 FR 9814849
(43) Date de publication de la demande: 31.05.2000
(73) Titulaire: THALES SYSTEMES AEROPORTES S.A., 92210 Saint-Cloud (FR)
(72) Inventeur: Quin, Jean-Philippe, 78320 Le Pecq (FR)
(74) Mandataire: Plaçais, Jean-Yves

(56) Documents cités:
- EP-A- 0 636 850
- DE-A- 4 417 262
- DE-U- 29 608 667
- FR-A- 2 743 162
- US-A- 5 307 272
- US-A- 5 452 639
- US-A- 5 592 170
- US-A- 5 712 441
- US-A- 5 719 500

## Description

La présente invention se rapporte au déplacement précis d'un véhicule, en particulier pour le déminage d'un terrain.

Les mines terrestres destinées à causer des dommages aux individus (appelées le plus souvent mines anti-personnel) sont généralement posées aléatoirement dans le sol ou bien sont larguées d'un avion ou d'un hélicoptère. Il en résulte qu'elles sont plus dangereuses et plus difficiles à détecter que les mines dites anti-chars qui sont souvent posées selon un schéma particulier.

Actuellement, on connaît deux techniques pour déminer un terrain pollué de mines terrestres de type anti-personnel ou analogue.

La première technique consiste à labourer systématiquement le terrain pour détruire les mines terrestres, sans détection individuelle desdites mines. Des moyens de destruction mécanique, tels que des broyeurs, rouleaux, ou fléaux fracturent les mines avant leur détonation, ce qui permet d'éviter une intervention humaine pour déminer ultérieurement les mines. Une telle approche est brutale. Elle est davantage adaptée aux zones où il faut intervenir rapidement et où la diversité des mines terrestres est importante.

La seconde technique consiste à neutraliser individuellement chaque mine terrestre ou agglomérat de mine. Une telle technique comprend tout d'abord un nettoyage du terrain (par débroussaillage de la végétation par exemple), suivi d'une détection des mines terrestres, et d'une neutralisation des mines ainsi détectées. Une telle technique est davantage adaptée aux terrains partiellement minés. Elle est moins brutale et moins consommatrice en énergie que la première technique.

La Demanderesse s'est posée le problème de fournir un déplacement précis d'un véhicule pour le déminage d'un terrain, en vue d'offrir une sécurité maximale aux opérateurs humains de déminage intervenant selon la seconde technique mentionnée ci-avant.

La présente invention apporte justement une solution à ce problème.

Elle porte sur un procédé de déplacement d'un véhicule, en particulier pour le déminage d'un terrain.

Selon une définition générale de l'invention, le procédé comprend les étapes suivantes :
a) disposer, à l'avant du véhicule de déminage, des premiers et seconds moyens de roulement, sensiblement parallèles entre eux, espacés les uns des autres d'une distance choisie, et propres à détruire mécaniquement les mines à la suite de leur passage, et des moyens de nettoyage propres à débroussailler, à une hauteur choisie par rapport à la surface du terrain, le terrain situé entre les premiers et seconds moyens de roulement,
b) équiper le véhicule de déminage de moyens de positionnement et de guidage centimétrique,
c) déplacer le véhicule de déminage selon un premier trajet du terrain à déminer, les premiers et seconds moyens de roulement laissant chacun une trace à la suite de leur passage,
d) déplacer le véhicule de déminage selon un second trajet du terrain, sensiblement parallèle au premier trajet et comprenant une trace du premier trajet, dans le sens opposé, et
e) répéter l'étape d) jusqu'à faire passer le véhicule de déminage sur tout le terrain à déminer.

Le déplacement précis du véhicule de déminage sur le terrain à déminer selon l'invention a l'avantage de permettre le débroussaillage du terrain en laissant des traces qui sont susceptibles de constituer des zones relativement sûres sur lesquelles des opérateurs humains peuvent ultérieurement se déplacer selon un degré de sécurité élevé pour neutraliser les mines.

De préférence, l'étape a) consiste en outre à disposer des moyens de détection de mines à l'arrière du véhicule, et le procédé comprend en outre l'étape f) consistant à construire une carte des mines ainsi détectées lors du déplacement du véhicule de déminage sur tout le terrain.

Une telle carte a l'avantage d'indiquer les emplacements des mines ainsi détectées. L'indication est soit matérielle (marquage sur le terrain) et/ou immatérielle (indication cartographiée et gardée en mémoire le cas échéant). Ainsi, les démineurs sont susceptibles de neutraliser les mines de manière relativement sécurisée en se déplaçant sur des traces relativement sûres laissées par le passage du véhicule de déminage, et en intervenant ensuite avec précision sur l'emplacement des mines ainsi indiqué.

La présente invention a également pour objet un dispositif de déplacement d'un véhicule pour la mise en oeuvre du procédé selon l'invention.

D'autres caractéristiques et avantages de l'invention apparaîtront à la lumière de la description détaillée ci-après et des dessins dans lesquels :
- la figure 1 est une vue représentant schématiquement les moyens essentiels d'une installation de déminage selon l'invention;
- la figure 2 est une vue en perspective du véhicule de déminage selon l'invention;
- les figures 3A à 3D sont différentes vues du véhicule de déminage selon l'invention;
- la figure 4 représente schématiquement les moyens de roulement du véhicule de déminage selon l'invention;
- la figure 5 représente schématiquement une variante du véhicule de déminage selon l'invention avec des moyens de récupération des déchets ainsi que des moyens coupe-fils;
- la figure 6 illustre schématiquement le déplacement du véhicule de déminage sur un terrain à déminer selon l'invention; et
- la figure 7 représente un organigramme illustrant les différentes étapes d'une mission de déminage selon l'invention.

Les dessins comportent des éléments de caractères certains. A ce titre, ils peuvent non seulement servir à décrire la présente invention, mais aussi à la définir, le cas échéant.

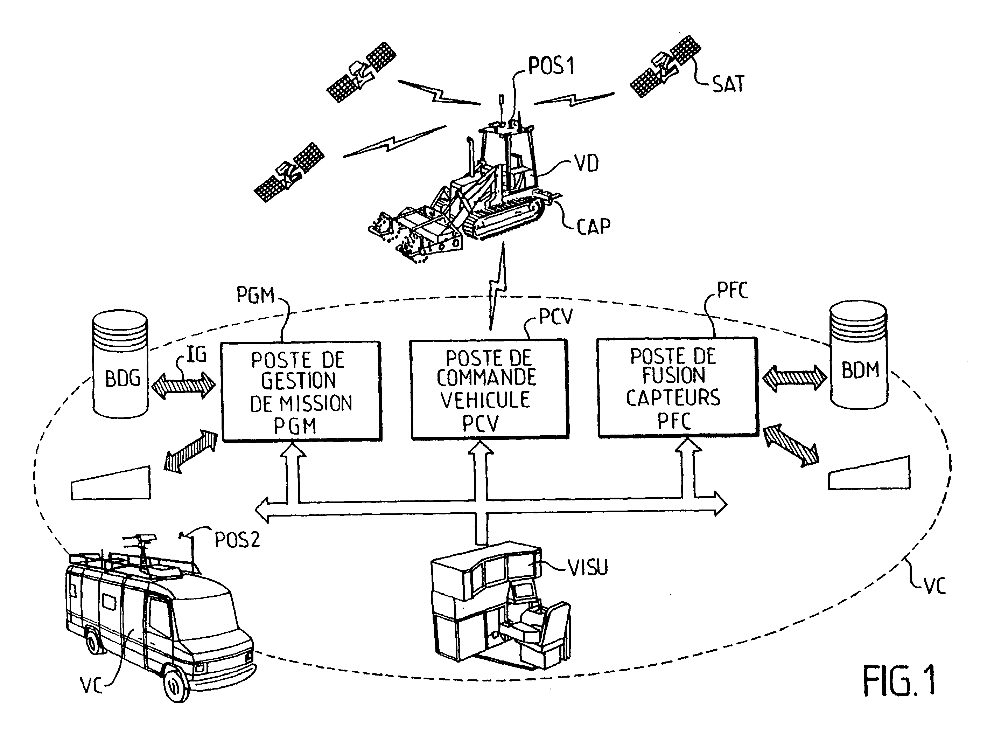

En référence à la figure 1, l'installation de déminage selon l'invention comprend un véhicule de déminage VD, un véhicule de commande VC, et, le cas échéant, un support logistique (non représenté).

Le véhicule de déminage VD peut être du type télé-opéré (c'est-à-dire contrôlé à distance), autonome, ou semi-autonome. Il est généralement sans pilote, mais il peut être conduit manuellement.

Le véhicule de commande VC comprend un poste de gestion de mission PGM, un poste de commande du véhicule de déminage VD, et, le cas échéant, un poste de fusion des données PFC émanant des capteurs CAP de détection de mines.

Le poste de gestion de mission PGM assure la préparation et la gestion de la mission de déminage, notamment à l'aide d'informations géographiques IG émanant de bases de données géographiques BDG.

Le poste de commande du véhicule de déminage contrôle le déplacement du véhicule de déminage VD à l'aide d'informations provenant notamment des moyens de positionnement et de guidage centimétrique que l'on décrira plus en détail ci-après.

Le poste de fusion des données PFC traite les informations émanant des capteurs de détection de mines CAP du véhicule de déminage VD. Ces informations peuvent être traitées en liaison avec une base de données BDM.

Les postes PGM, PCV et PFC, sont équipés avantageusement d'un système de visualisation VISU. Chacune des tâches du véhicule de commande (gestion mission, contrôle véhicule, et fusion des données) est assumée par au moins un opérateur.

Le véhicule de commande VC est par exemple construit à partir d'un véhicule poids lourd à roues d'environ 10 à 12 tonnes.

Avantageusement, le véhicule de commande VC est situé en dehors de la zone dangereuse pour le protéger contre les éclats de déminage.

Le support logistique (non représenté) est destiné à assurer la production en énergie. Il comprend le cas échéant un atelier de maintenance pour les systèmes légers.

De préférence, mais non limitativement, le véhicule de déminage est du type télé-opéré, et reprend au moins certains éléments de guidage du véhicule décrit dans le Brevet français n°95 15579 déposé au nom de la Demanderesse et dont la description fait partie intégrante de la présente Demande à toutes fins utiles.

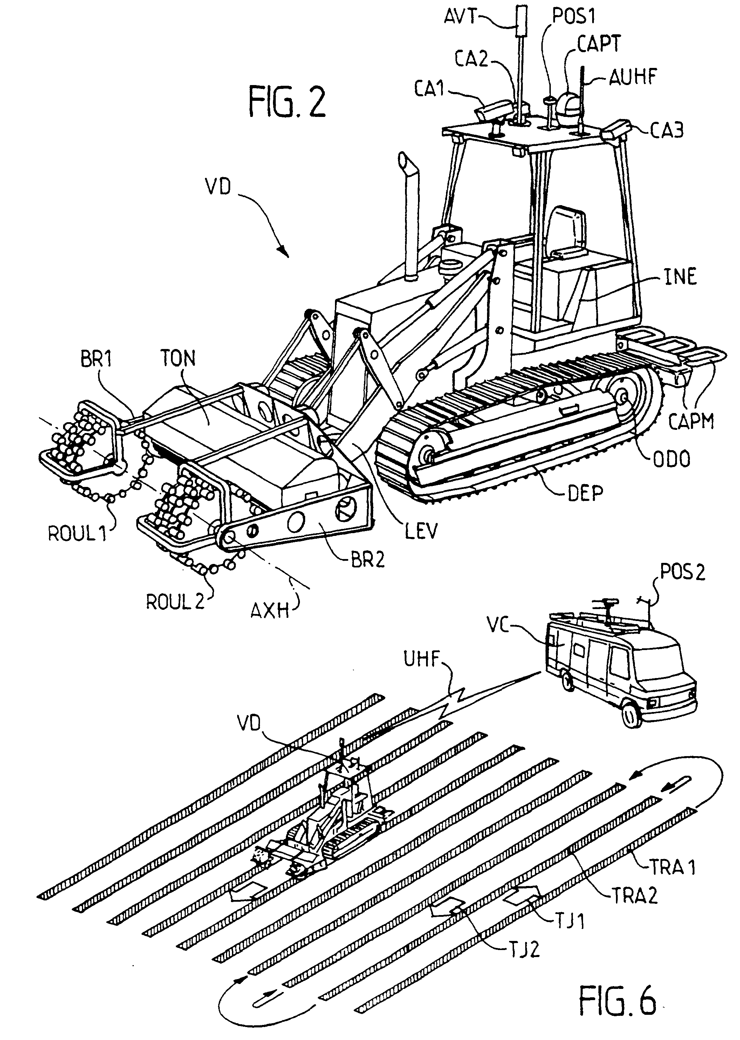

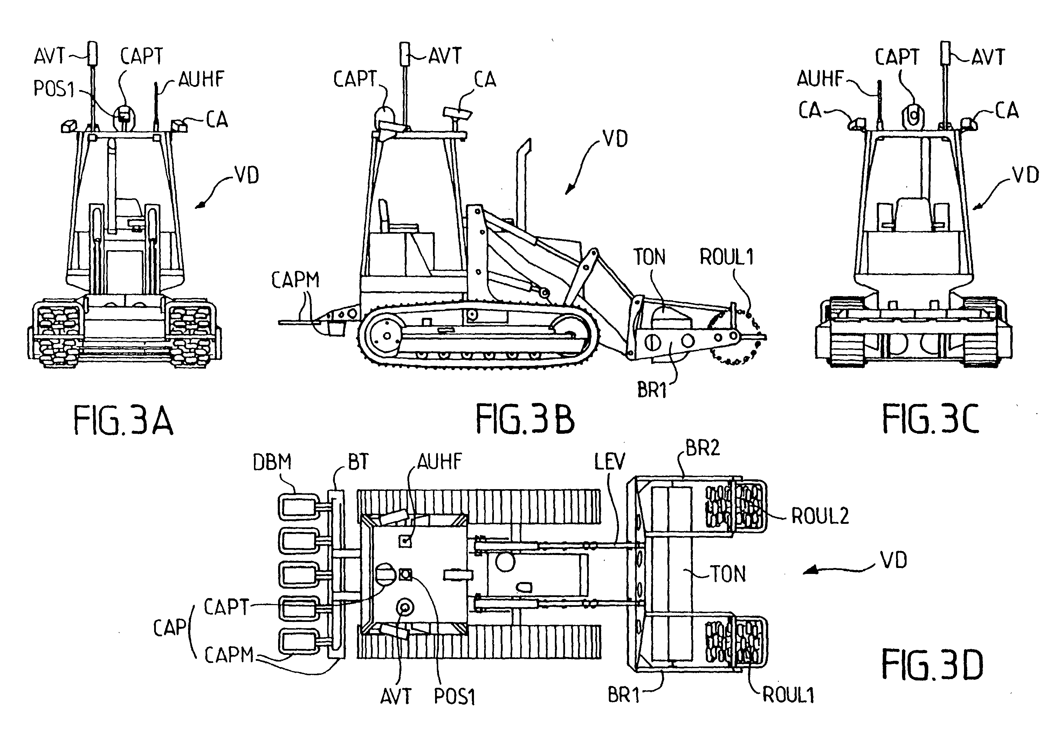

Ainsi, en bref et en référence aux figures 1, 2 et 3A à 3D, le véhicule de déminage est équipé de moyens de prise de vue (caméras CA1, CA2, CA3) pour enregistrer des images de l'environnement dans lequel le véhicule de déminage VD se déplace. Des moyens d'émission/réception d'informations vidéo AVT sont également prévus pour transmettre les images ainsi enregistrées vers le véhicule de commande VC, ainsi que les informations délivrées par des moyens actifs et capteurs du véhicule de déminage et pour recevoir les consignes de commande (des organes moteur et de direction du véhicule de déminage) émanant de l'opérateur via le véhicule de commande.

Les moyens de positionnement et de guidage centimétrique du véhicule de déminage VD comprennent notamment un récepteur POS1 de type DGPS, au moins un odomètre ODO, et une centrale inertielle INE.

En pratique, deux odomètres ODO sont prévus pour fournir une mesure du déplacement longitudinal (mesure de vitesse) du véhicule de déminage.

De préférence, un odomètre ODO est placé dans chaque chenille d'entraînement DEP du véhicule de déminage VD.

La centrale inertielle INE fournit une mesure des trois angles d'attitude du véhicule (un lacet relatif, et les roulis et tangage absolus), ainsi qu'une mesure des accélérations suivant les trois axes du véhicule.

Le système de positionnement est du genre GPS ou GLONASS dans lequel des satellites SAT (figure 1) émettent des ondes porteuses marquées temporellement par des codes pseudo-aléatoires.

De préférence, le système de positionnement est de type différentiel DGPS. Il délivre une mesure centimétrique de la position absolue de l'antenne POS1 placée sur le véhicule de déminage. Cette antenne POS1 est dite mobile.

Une antenne POS2, fixe, appelée station de référence, se trouve installée au niveau du véhicule de commande VC. Cette antenne POS2 est disposée en un point dont les coordonnées sont connues au centimètre près.

Les corrections du système de positionnement GPS sont transmises de l'antenne POS2 vers l'antenne POS1 via une liaison hertzienne de type UHF. Une antenne AUHF est placée sur les véhicules de déminage VD et de commande VC.

Le procédé de calcul de la position centimétrique du véhicule de déminage est du type LRK pour "Long Range Kinematic". Ce procédé utilise les deux fréquences du système GPS appelées L1 et L2.

Une première solution approchée est calculée par un procédé récursif en utilisant les pseudo-distances et les triples différences de phase sur la fréquence L1, ainsi que les triples différences de phase sur la fréquence L2 et les pseudo-distances sur L1/L2.

La solution finale est alors calculée en partant de la solution approchée par résolution en deux itérations d'une équation aux différences.

Toutes ces mesures sont utilisées afin d'estimer au centimètre près la position instantanée du véhicule de déminage par un filtrage de type KALMAN.

Un tel système de positionnement est par exemple vendu sous la référence "AQUARIUS" par la société française DASSAULT SERCEL NAVIGATION et POSITIONNEMENT.

Le véhicule de déminage VD est de préférence construit à partir d'un engin de travaux publics (comme par exemple celui vendu par la Société CATERPILLAR sous la référence D3C CAT ou 939 CAT).

Des modifications sont apportées aux organes moteur et de direction du véhicule de deminage pour permettre le téléguidage du véhicule de déminage conformément au mode autonome décrit dans le brevet FR-9515579, mentionné ci-avant.

Selon l'invention, des moyens de roulement ROUL1 et ROUL2, sensiblement parallèles entre eux, sont disposés à l'avant du véhicule. Ces moyens de roulement, appelés "rollers", sont par exemple des rouleaux ou roues en métal montés rotatifs par rapport à un axe horizontal.

En référence aux figures 1 à 5, les moyens de roulement ROUL sont par exemple supportés par des bras BR1, et BR2 montés pivotants autour d'un axe horizontal AXH. Ces moyens de roulement ROUL peuvent être similaires à ceux habituellement utilisés dans la première technique de déminage mentionnée dans l'introduction de la présente Demande. Ils s'en distinguent par le fait qu'ils ne couvrent pas toute la largeur du véhicule de déminage mais seulement deux surfaces de roulement de quelques dizaines de cm chacune, espacées l'une de l'autre d'une distance de l'ordre de 1 à 2 m.

En pratique, les moyens de roulement ROUL comprennent trois chaînes en acier indépendantes les unes des autres et montées sur des axes parallèles entre eux. Ces chaînes, individualisées en CH1 à CH3, forment des roues en acier permettant de simuler le roulement d'une chenille.

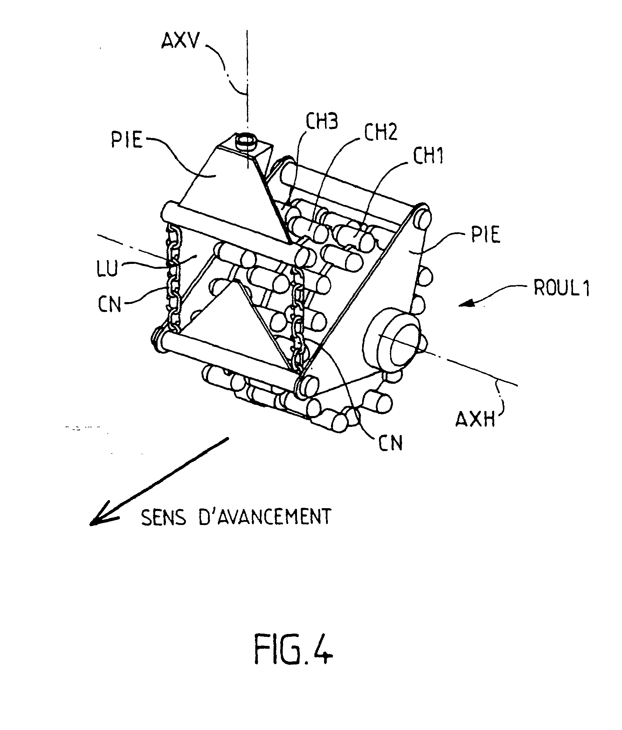

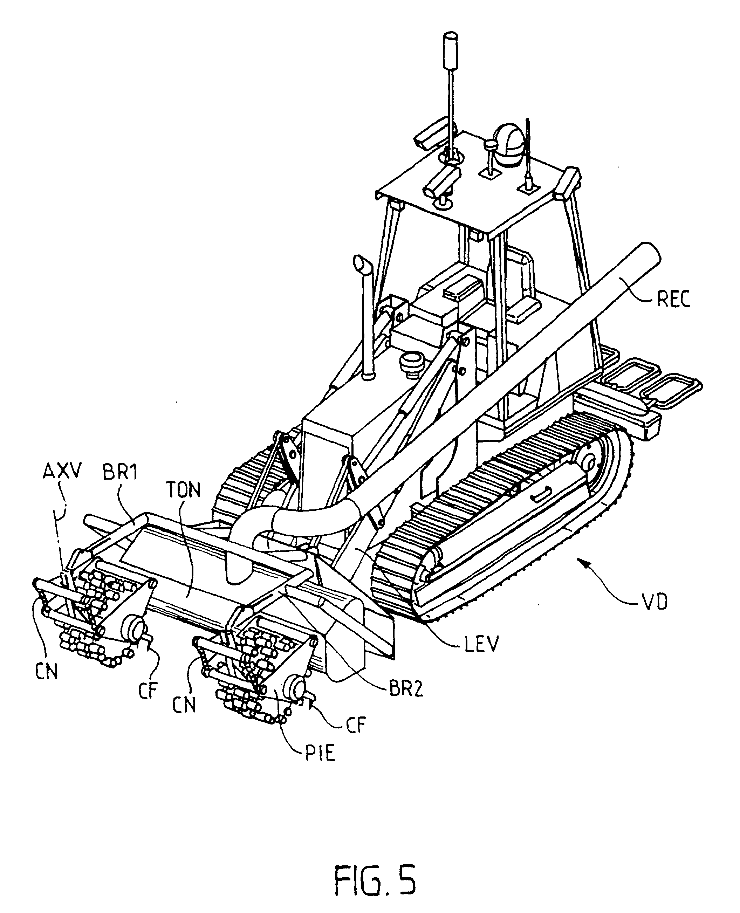

Une pièce PIE (figure 4 ou 5) est prévue pour solidariser les moyens de roulement avec les bras de traction et de levage BR1, BR2 et LEV du véhicule de déminage VD. Cette pièce PIE est montée rotative autour d'un axe vertical AXV afin de permettre une rotation des moyens de roulement lorsque le véhicule de déminage VD effectue un pivotement autour d'un axe vertical. La pièce PIE permet ainsi le mouvement des moyens de roulement. Ce mouvement est guidé par l'axe AXV qui se déplace dans une lumière LU définie par exemple par des chaînes CN. La lumière LU est solidaire des bras de traction BR1 et BR2 (figure 5). Par exemple, les bras de traction BR1 et BR2 sont également solidaires des bras de levage LEV du véhicule VD qui peut être du type engin de travaux publics.

Avantageusement, les surfaces de roulement des moyens de roulement sont susceptibles de laisser deux traces sur le terrain à déminer. La pression appliquée par les moyens de roulement sur le sol est choisie pour permettre la destruction mécanique d'une mine de faible puissance.

Des moyens de nettoyage TON sont disposés également à l'avant du véhicule pour débroussailler, à une hauteur choisie par rapport à la surface du terrain, le terrain situé entre les premiers et seconds moyens de roulement ROUL1 et ROUL2 lors du déplacement du véhicule de déminage.

En pratique, les moyens de nettoyage TON comprennent un système de type tondeuse, roto-broyeur, ou lame de coupe propre à tourner autour d'un axe horizontal à une hauteur choisie par rapport à la surface du terrain. Par exemple, la lame est constituée d'un rotor muni de fléaux en acier ou de couteaux-cuillères.

Des moyens de récupération des déchets REC (figure 5) peuvent le cas échéant être prévus pour récupérer les déchets issus du débroussaillage. Ces moyens de récupération REC sont par exemple des moyens à aspiration adaptés sur les moyens de nettoyage TON pour récupérer les résidus issus de la coupe et les rejeter dans un réceptacle (non représenté) solidaire du véhicule de déminage.

Le véhicule de déminage VD peut accueillir des moyens de détection de mines CAP, de type capteur magnétique CAPM, caméra thermique infrarouge CAPT, et radar de détection par imagerie interne du sol (non représenté).

Les moyens de détection CAP sont disposés de préférence à l'arrière du véhicule afin de ne pas être endommagés par l'explosion d'une mine lors du passage des moyens de roulement du véhicule de déminage.

Par exemple, les capteurs magnétiques CAPM sont disposés à l'arrière du véhicule sur une barre transversale BT munie de plusieurs dents DBM en forme de boucle magnétique.

Le véhicule VD est équipé pour être d'un coût minimal en possession et en maintenance. Avantageusement, la structure du véhicule est simplifiée par la suppression des éléments ne concourant pas à la mission de déminage.

Le poids du véhicule de déminage est de l'ordre de 10 tonnes, avec une longueur inférieure ou égale à 6 mètres, une largeur inférieure ou égale à 2,70 mètres et une hauteur inférieure ou égale à 4 mètres.

Certaines parties vitales du véhicule (tuyauterie, organe de direction/freinage) sont protégées par un blindage léger (de type aramide par exemple) contre les éclats des mines anti-personnels. Les organes de mobilité du véhicule (moteur, réducteur, transmission) sont protégés de façon plus significative. De préférence, la partie inférieure du véhicule de déminage est fortement blindée de façon à résister à l'explosion de tous types de mines anti-personnel. La cabine de pilotage est avantageusement fermée à l'aide de vitres blindées.

Avantageusement, une plaque blindée (non représentée) est montée entre les moyens de roulements ROUL1 et ROUL2 et les moyens de nettoyage TON afin de protéger le véhicule de déminage des éclats de mines explosant sous l'action des moyens de roulement.

Certains constituants plus exposés du véhicule, comme les chenilles DEP ou les moyens de roulement ROUL1 et ROUL2, sont susceptibles d'être endommagés par une mine anti-personnel de forte puissance. Avantageusement, ces moyens sont conçus pour être facilement réparables et d'une technologie de construction simple, peu coûteuse, et facilement accessible.

Des coupe-fils CF (figure 5) peuvent être également disposés à des endroits appropriés pour couper les fils sur le passage du véhicule de déminage. Par exemple, ces coupe-fils CF sont disposés à l'avant du véhicule, en aval des moyens de roulement ROUL1 et ROUL2. Ils peuvent être solidaires du châssis du véhicule de déminage. Ils peuvent comporter une herse multi-lames CF apte à racler la surface du sol immédiatement à la suite du passage des moyens de roulement.

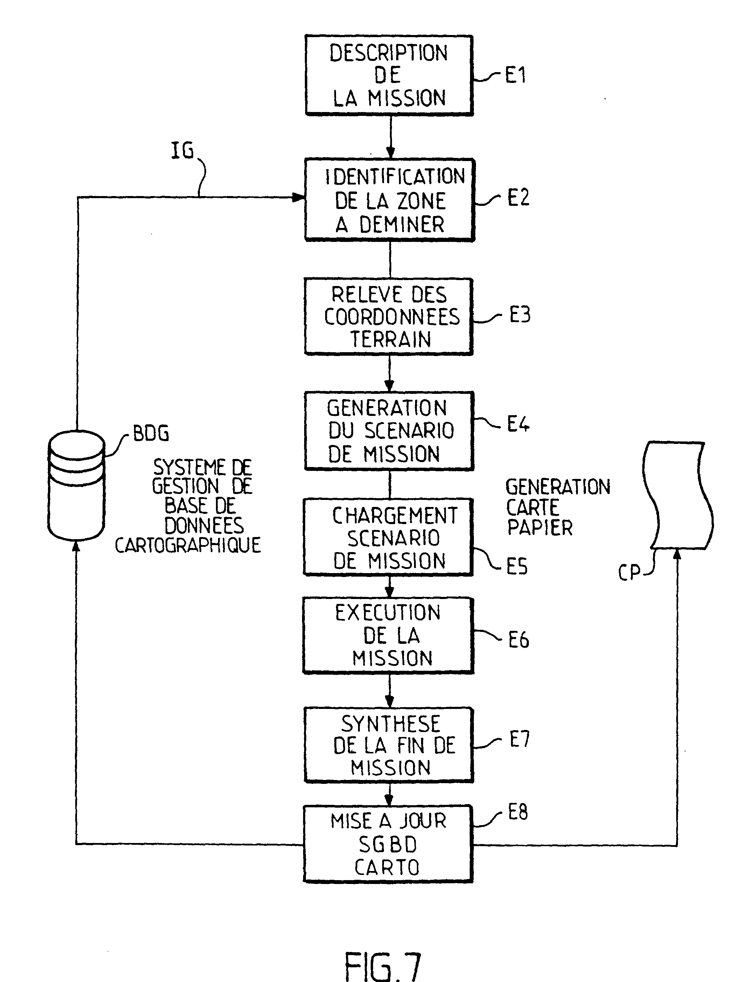

En référence à la figure 6, le véhicule VD est déplacé selon un premier trajet TJ1 du terrain à déminer. Ce premier trajet TJ1 comprend deux traces TRA1 et TRA2, sensiblement parallèles entre elles, laissées par les moyens de roulement ROUL1 et ROUL2 du véhicule de déminage.

Ces traces TRA1 et TRA2 constituent des zones relativement sûres sur lesquelles pourront intervenir ultérieurement les opérateurs de déminage.

Selon l'invention, pour quadriller le terrain à déminer, le procédé de déplacement selon l'invention, prévoit de faire déplacer le véhicule de déminage selon un second trajet TJ2 du terrain, parallèle au premier trajet TJ1, et comprenant une trace TRA2 du premier trajet TJ1, dans le sens opposé.

Le procédé prévoit de répéter le déplacement du véhicule de déminage jusqu'à faire passer le véhicule de déminage sur tout terrain à déminer.

A l'issue du quadrillage ainsi effectué selon l'invention, les opérateurs de déminage sont susceptibles de se déplacer sur les traces laissées par le véhicule sur le terrain. Ces traces sont des zones relativement sûres, c'est-à-dire non polluées par des mines puisque celles-ci, en principe, ont déjà explosé sous l'action des moyens de roulement.

Ainsi, les opérateurs de déminage peuvent plus facilement et avec un degré de sécurité relativement élevé, intervenir ultérieurement sur les mines qui ont été détectées lors du passage du véhicule de déminage.

En référence à la figure 7, les principales étapes d'une mission de déminage sont représentées sous la forme d'un organigramme.

L'étape E1 consiste à décrire et analyser la mission de déminage qui comprend en règle générale une étape de nettoyage et une étape de déminage des mines détectées lors du passage du véhicule de déminage lors du nettoyage du terrain.

L'étape E2 consiste à identifier la zone à déminer. Des information géographiques IG de la zone, provenant par exemple de bases de données géographiques BDG, de sources satellites SPOT, ..., servent à définir la zone à déminer.

L'étape E3 consiste à relever les coordonnées géographiques du terrain à déminer.

L'étape E4 consiste à préparer la mission, en générant par exemple un scénario qui indique le trajet à parcourir, la durée de la mission, le plan d'action pour les équipes d'intervention, et la consommation prévisionnelle des moyens mis en oeuvre.

L'étape E5 consiste à charger le scénario de la mission ainsi préparé.

L'étape E6 consiste à exécuter la mission en garantissant la sécurité des opérateurs de déminage, grâce au déplacement précis du véhicule de déminage décrit en détail en référence à la figure 6.

L'étape E7 prévoit une synthèse de fin de mission dont le résultat sert à mettre à jour (étape E8) la base de données destinée à contenir les résultats des missions de déminage BDG, ainsi que les cartes des terrains. Une carte CP sous forme papier peut être générée à partir d'une telle mise à jour.

Lorsqu'une mine est détectée par les moyens de détection CAP, CAPT, CAPM, l'information de détection est reçue et validée par l'opérateur chargé de la fusion de données situé dans le poste de fusion de données. L'emplacement de la mine ainsi détecté est marqué au passage du véhicule de façon matérielle (marque réelle sur le terrain), et/ou de façon immatérielle (emplacement gardé en mémoire ou cartographie).

L'opération de neutralisation humaine des mines est traitée de façon conventionnelle, par exemple selon les normes en vigueur.

Il est à remarquer que le véhicule de déminage peut être un simple véhicule de travaux publics à l'avant duquel sont montés des moyens de nettoyage ainsi que des moyens de roulement. L'équipement du véhicule de déminage est complété par des moyens de détection situés avantageusement à l'arrière. Un tel véhicule de déminage est très léger par rapport aux véhicules blindés qui généralement servent au déminage des mines anti-personnel. Le rayon d'action du véhicule de déminage selon l'invention est donc plus grand que celui des véhicules de l'art antérieur. De plus, le véhicule de déminage après la mission de déminage peut être réutilisé pour des fonctions autres que des opérations de déminage, par exemple de type travaux publics ou engins de manutention.

## Revendications

1. Procédé de déplacement d'un véhicule, en particulier pour déminage d'un terrain, **caractérisé en ce qu'**il comprend les étapes suivantes :
a) disposer, à l'avant du véhicule de déminage (VD), des premiers et seconds moyens de roulement (ROUL1 et ROUL2), sensiblement parallèles entre eux, espacés les uns des autres d'une distance choisie, et propres à détruire mécaniquement les mines à la suite de leur passage, et des moyens de nettoyage (TON) propres à débroussailler, à une hauteur choisie par rapport à la surface du terrain, le terrain situé entre les premiers et seconds moyens de roulement (ROUL1 et ROUL2),
b) équiper le véhicule de déminage (VD) de moyens de positionnement (POS1) et de guidage (ODO, INE) centimétrique,
c) déplacer le véhicule de déminage (VD) selon un premier trajet (TJ1) du terrain à déminer, les premiers et seconds moyens de roulement (ROUL1 et ROUL2) laissant chacun une trace (TRA1 et TRA2) à la suite de leur passage,
d) déplacer le véhicule de déminage (VD) selon un second trajet (TJ2) du terrain, sensiblement parallèle au premier trajet (TJ1) et comprenant une trace (TRA2) du premier trajet (TJ1), dans le sens opposé, et
e) répéter l'étape d) jusqu'à faire passer le véhicule de déminage sur tout le terrain à déminer.

2. Procédé selon la revendication 1, **caractérisé en ce que** l'étape a) consiste en outre à disposer à l'arrière du véhicule de déminage (VD) des moyens de détection de mines (CAP), et **en ce que** le procédé comprend en outre l'étape f) consistant à construire une carte des mines ainsi détectées lors du déplacement du véhicule (VD) sur tout le terrain.

3. Installation pour le déplacement précis d'un véhicule sur un terrain, en particulier un véhicule de déminage, **caractérisée en ce que** le véhicule de déminage (VD) comprend:
- à l'avant du véhicule de déminage (VD), des premiers et seconds moyens de roulement (ROUL1 et ROUL2), sensiblement parallèles entre eux, espacés les uns des autres d'une distance choisie, et propres à détruire mécaniquement les mines à la suite de leur passage,
- des moyens de nettoyage (TON) propres à débroussailler, à une hauteur choisie par rapport à la surface du terrain, le terrain situé entre les premiers et seconds moyens de roulement (ROUL1 et ROUL2),
- des moyens de positionnement (POS1) et de guidage (ODO,INE) centimétrique propre à déplacer le véhicule de déminage (VD) selon un premier trajet (TJ1) du terrain à déminer, les premiers et seconds moyens de roulement (ROUL1 et ROUL2) laissant chacun une trace (TRA1, et TRA2) à la suite de leur passage, et selon un second trajet (TJ2) du terrain, parallèle au premier trajet (TJ1) et comprenant une trace (TRA2) du premier trajet (TJ1), dans le sens opposé.

4. Installation selon la revendication 3, **caractérisée en ce que** le véhicule de déminage (VD) comprend en outre des moyens de détection de mines (CAP,CAPM,CAPT), disposés à l'arrière du véhicule de déminage (VD), et ce que le dispositif comprend en outre des moyens propres à construire une carte des mines ainsi détectées lors du déplacement du véhicule de déminage sur tout le terrain.

5. Installation selon la revendication 3, **caractérisée en ce que** les moyens de nettoyage (TON) comprennent au moins un outil de type lame de coupe ou roto-broyeur apte à tourner autour d'un axe horizontal à une hauteur choisie par rapport à la surface horizontale du terrain.

6. Installation selon la revendication 3, **caractérisée en ce que** le véhicule de déminage (VD) est du type autonome, ou semi-autonome, avec ou sans pilote.

7. Installation selon la revendication 3, **caractérisée en ce que** le véhicule de déminage (VD) est du type télé-opéré.

8. Installation selon la revendication 7, **caractérisée en ce qu'**il comprend en outre un véhicule de commande (VC) propre à communiquer à distance avec le véhicule de déminage (VD) afin de commander le déplacement du véhicule de déminage (VD) selon les premier et second trajets (TJ1 et TJ2).

9. Installation selon la revendication 8, **caractérisée en ce que** le véhicule de commande (VC) comprend un poste de gestion de mission de déminage (PGM), un poste de commande du véhicule de déminage (PCV,POS2) communiquant avec les moyens de positionnement (POS1) et de guidage (ODO,INE) du véhicule de déminage (VD), et un poste de fusion de données émanant des moyens de détection des mines (CAP,CAPM,CAPT).

10. Installation selon la revendication 9, **caractérisée en ce que** le poste de gestion de mission (PGM) utilise des informations géographiques (IG) délivrées par une base de données géographiques (BDG).

11. Installation selon la revendication 9, **caractérisée en ce que** le poste de fusion de données (PFC) délivre des informations de localisation de mines (CP) en vue d'une reconnaissance du terrain.

12. Installation selon la revendication 3, **caractérisée en ce que** les moyens de positionnement et de guidage centimétrique du véhicule de déminage (VD) comprennent un récepteur (POS1) de type GPS, au moins un odomètre (ODO), et une centrale inertielle (INE).

13. Installation selon la revendication 3, **caractérisée en ce que** le poids du véhicule de déminage (VD) est de l'ordre de 10 tonnes.

## Patentansprüche

1. Verfahren zum Bewegen eines Fahrzeugs, insbesondere zur Minenräumung eines Geländes, **dadurch gekennzeichnet, daß** es die folgenden Schritte umfaßt:
a) an der Vorderseite des Minenräumfahrzeugs (VD) das Anordnen von ersten und zweiten Rolleinrichtungen (ROUL1 und ROUL2), die dazu geeignet sind, die Minen beim Überfahren mechanisch zu zerstören, im wesentlichen parallel zueinander und in einem vorgewählten gegenseitigen Abstand, und von Räumeinrichtungen (TON), die dazu geeignet sind, in einer gewählten Höhe gegenüber der Oberfläche des Terrains das zwischen den ersten und zweiten Rolleinrichtungen (ROUL1 und ROUL2) gelegene Terrain von Gestrüpp befreien,
b) Ausrüsten des Minenräumfahrzeugs (VD) mit Einrichtungen zur zentimetergenauen Positionierung (POS1) bzw. Führung (ODO, INE),
c) Bewegen des Minenräumfahrzeugs (VD) auf einer ersten Bahn (TJ1) des von Minen zu räumenden Terrains, wobei die ersten und zweiten Rolleinrichtungen (ROUL1 und ROUL2) jeweils eine Spur (TRA1 und TRA2) hinter sich zurücklassen,
d) Bewegen des Minenräumfahrzeugs (VD) auf einer zweiten Bahn (TJ2) des Terrains, die im wesentlichen parallel zur ersten Bahn (TJ1) verläuft und eine Spur (TRA2) der ersten Bahn (TJ1) enthält, in entgegengesetzter Richtung, und
e) Wiederholen des Schritts d), bis das Minenräumfahrzeug das gesamte von Minen zu räumende Terrain abgefahren hat.

2. Verfahren nach Anspruch 1, **dadurch gekennzeichnet, daß** der Schritt a) unter anderem darin besteht, hinter dem Minenräumfahrzeug (VD) Minensucheinrichtungen (CAP) anzuordnen, und daß das Verfahren weiterhin den Schritt f) aufweist, der darin besteht, eine Karte der beim Bewegen des Fahrzeugs (VD) über das gesamte Terrain so erfaßten Minen zu erstellen.

3. Einrichtung zum genauen Bewegen eines Fahrzeugs über ein Terrain, insbesondere eines Minenräumfahrzeugs, **dadurch gekennzeichnet, daß** das Minenräumfahrzeug (VD) enthält:
- an der Vorderseite des Minenräumfahrzeugs (VD) erste und zweite Rolleinrichtungen (ROUL1 und ROUL2), die zueinander im wesentlichen parallel sind und voneinander einen gewählten Abstand haben und dazu eingerichtet sind, die Minen beim Überfahren derselben mechanisch zu zerstören;
- Räumeinrichtungen (TON), die dazu eingerichtet sind, in einer gewählten Höhe gegenüber der Oberfläche des Terrains das zwischen den ersten und zweiten Rolleinrichtungen (ROUL1 und ROUL2) gelegene Terrain von Gestrüpp zu befreien,
- Einrichtungen zum zentimetergenauen Positionieren (POS1) und Führen (ODO, INE) des Minenräumfahrzeugs (VD) auf einer ersten Bahn (TJ1) des von Minen zu räumenden Terrains, wobei die ersten und zweiten Rolleinrichtungen (ROUL1 und ROUL2) jeweils eine Spur (TRA1 und TRA2) hinter sich zurücklassen, und auf einer zweiten Bahn (TJ2) des Terrains in entgegengesetzter Richtung, die parallel zur ersten Bahn (TJ1) verläuft und eine Spur (TRA2) der ersten Bahn (TJ1) enthält.

4. Einrichtung nach Anspruch 3, **dadurch gekennzeichnet, daß** das Minenräumfahrzeug (VD) weiterhin Minensucheinrichtungen (CAP, CAPM, CAPT) aufweist, die an der Rückseite des Minenräumfahrzeugs (VD) angeordnet sind, und daß die Vorrichtung weiterhin Einrichtungen enthält, die dazu geeignet sind, eine Karte der auf diese Weise beim Bewegen des Minenräumfahrzeugs über das gesamte Terrain erfaßten Minen zu erstellen.

5. Einrichtung nach Anspruch 3, **dadurch gekennzeichnet, daß** die Räumeinrichtungen (TON) wenigstens ein Schneidklingenwerkzeug oder einen rotierenden Zerkleinerer enthält, das bzw. der dazu eingerichtet ist, um eine horizontale Achse in einer gegenüber der horizontalen Oberfläche des Terrains gewählten Höhe zu rotieren.

6. Einrichtung nach Anspruch 3, **dadurch gekennzeichnet, daß** das Minenräumfahrzeug (VD) ein unabhängiges oder halbunabhängiges Fahrzeug mit oder ohne Fahrer ist.

7. Einrichtung nach Anspruch 3, **dadurch gekennzeichnet, daß** das Minenräumfahrzeug (VD) ein ferngesteuertes Fahrzeug ist.

8. Einrichtung nach Anspruch 7, **dadurch gekennzeichnet, daß** sie weiterhin ein Steuerfahrzeug (VC) enthält, das dazu eingerichtet ist, von fern mit dem Minenräumfahrzeug (VD) zu kommunizieren, um die Bewegung des Minenräumfahrzeugs (VD) auf den ersten und zweiten Bahnen (TJ1 und TJ2) zu steuern.

9. Einrichtung nach Anspruch 8, **dadurch gekennzeichnet, daß** das Steuerfahrzeug (VC) ein Minenräumeinsatz-Steuergerät (PGM), ein Gerät zum Steuern des Minenräumfahrzeugs (PCV, POS2), das mit den Positionier- und Führungseinrichtungen (POS1; ODO, INE) des Minenräumfahrzeugs (VD) kommuniziert, und ein Vereinigungsgerät für die Daten aufweist, die von den Minensucheinrichtungen (CAP, CAPM, CAPT) stammen.

10. Einrichtung nach Anspruch 9, **dadurch gekennzeichnet, daß** das Einsatzsteuergerät (PGM) die von einer geographischen Datenbank (BDG) gelieferten geographischen Informationen (IG) verwendet.

11. Einrichtung nach Anspruch 9, **dadurch gekennzeichnet, daß** das Datenvereinigungsgerät (PFC) Minenortsinformationen (CP) im Hinblick auf eine Wiedererkennung des Terrains abgibt.

12. Einrichtung nach Anspruch 3, **dadurch gekennzeichnet, daß** die Einrichtungen zum zentimetergenauen Positionieren und Führen des Minenräumfahrzeugs (VD) einen GPS-Empfänger (POS1), wenigstens einen Wegstreckenmesser (ODO) und ein Trägheitswerk (INE) enthalten.

13. Einrichtung nach Anspruch 3, **dadurch gekennzeichnet, daß** das Gewicht des Minenräumfahrzeugs (VD) in der Größenordnung von 10 to liegt.

## Claims

1. Method of moving a vehicle, particularly for clearing mines from a terrain, **characterized in that** it comprises the following steps:
a) arranging, at the front of the mine-clearing vehicle (VD), first and second rolling means (ROUL1 and ROUL2), roughly parallel to one another, spaced a chosen distance apart and capable mechanically of destroying the mines as they pass, and cleaning means (TON) able, at a chosen height with respect to the surface of the terrain, to clean plant growth from the terrain situated between the first and second rolling means (ROUL1 and ROUL2),
b) equipping the mine-clearing vehicle (VD) with centimetric positioning (POS1) and guiding (ODO, INE) means,
c) moving the mine-clearing vehicle (VD) in a first path (TJ1) over the terrain that is to be cleared of mines, the first and second rolling means (ROUL1 and ROUL2) each leaving a trace (TRA1 and TRA2) after they have passed,
d) moving the mine-clearing vehicle (VD) in a second path (TJ2) over the terrain, roughly parallel to the first path (TJ1) and comprising a trace (TRA2) of the first path (TJ1), in the opposite direction, and
e) repeating step d) until the mine-clearing vehicle has passed over the entire terrain that is to be cleared of mines.

2. Method according to Claim 1, **characterized in that** step a) further consists of arranging mine-detection means (CAP) at the rear of the mine-clearing vehicle (VD), and **in that** the method further comprises step f) which consists of constructing a map of the mines thus detected as the vehicle (VD) moves over the entire terrain.

3. Apparatus for accurately moving a vehicle over a terrain, particularly a mine-clearing vehicle, **characterized in that** the mine-clearing vehicle (VD) comprises:
- at the front of the mine-clearing vehicle (VD), first and second rolling means (ROUL1 and ROUL2), roughly parallel to one another, spaced a chosen distance apart and capable mechanically of destroying the mines as they pass,
- cleaning means (TON) able, at a chosen height with respect to the surface of the terrain, to clean plant growth from the terrain situated between the first and second rolling means (ROUL1 and ROUL2),
- centimetric positioning (POS1) and guiding (ODO, INE) means able to move the mine-clearing vehicle (VD) in a first path (TJ1) over the terrain that is to be cleared of mines, the first and second rolling means (ROUL1 and ROUL2) each leaving a trace (TRA1 and TRA2) after they have passed, and in a second path (TJ2) over the terrain, parallel to the first path (TJ1) and comprising a trace (TRA2) of the first path (TJ1), in the opposite direction.

4. Apparatus according to Claim 3, **characterized in that** the mine-clearing vehicle (VD) further comprises mine-detection means (CAP, CAPM, CAPT) arranged at the rear of the mine-clearing vehicle (VD), and **in that** the device further comprises means able to construct a map of the mines thus detected as the mine-clearing vehicle moves over the entire terrain.

5. Apparatus according to Claim 3, **characterized in that** the cleaning means (TON) comprise at least one tool of the cutting blade or rotary shredder type able to rotate about a horizontal axis at a chosen height with respect to the horizontal surface of the terrain.

6. Apparatus according to Claim 3, **characterized in that** the mine-clearing vehicle (VD) is of the self-propelled or semi-self-propelled type, with or without a driver.

7. Apparatus according to Claim 3, **characterized in that** the mine-clearing vehicle (VD) is of the remote-operated type.

8. Apparatus according to Claim 7, **characterized in that** it further comprises a control vehicle (VC) able to communicate remotely with the mine-clearing vehicle (VD) so as to control the movement of the mine-clearing vehicle (VD) along the first and second paths (TJ1 and TJ2).

9. Apparatus according to Claim 8, **characterized in that** the control vehicle (VC) comprises a mine-clearing mission command station (PGM), a mine-clearing vehicle control station (PCV, POS2) communicating with the means of positioning (POS1) and guiding (ODO, INE) of the mine-clearing vehicle (VD) and a station merging data emanating from the mine-detection means (CAP, CAPM, CAPT).

10. Apparatus according to Claim 9, **characterized in that** the mission command station (PGM) uses geographical information (IG) delivered by a geographical database (BDG).

11. Apparatus according to Claim 9, **characterized in that** the data-merging station (PFC) delivers mine-location information (CP) with a view to recognizing the terrain.

12. Apparatus according to Claim 3, **characterized in that** the centimetric means of positioning and guiding the mine-clearing vehicle (VD) comprise a receiver (POS1) of the GPS type, at least one odometer (ODO) and an inertial unit (INE).

13. Apparatus according to Claim 3, **characterized in that** the weight of the mine-clearing vehicle (VD) is of the order of 10 tonnes.
